# EUROPÄISCHE PATENTANMELDUNG

(11) **EP 2 881 020 A1**
(43) Veröffentlichungstag der Anmeldung: **10.06.2015**
(21) Anmeldenummer: 14194199.7
(22) Anmeldetag: 20.11.2014
(51) Int. Cl.: A47J 31/54

(54) **Durchlauferhitzer, Milchaufschäumer mit Durchlauferhitzer und Kaffeemaschine mit Durchlauferhitzer**

(30) Priorität: 03.12.2013 DE 102013224750
(71) Anmelder: WMF AG, 73312 Geislingen/Steige (DE)
(72) Erfinder: Göltenboth, Frank, 89134 Blaustein (DE); Dollner, Sander, 89233 Neu-Ulm (DE); Gussmann, Jochen, 73527 Schwäbisch-Gmünd (DE); Kuchler, Thobias, 89077 Ulm (DE); Beyeler, Marianna, 3422 Alchenflüh (CH); Werthmüller, Fabian, 4513 Langendorf (CH)
(74) Vertreter: Pfenning, Meinig & Partner GbR

(57) **Zusammenfassung**

Durchlauferhitzer zum Anschluss an oder zur Integration in eine Kaffeemaschine (K) und/oder einen Milchaufschäumer mit einer mit einem Fluid durchströmbaren Leitung (1), und einer zum Beheizen der Leitung (1) und/oder einer sich beim Durchströmen der Leitung (1) in dieser befindenden Fluidmenge (F) ausgebildeten Heizvorrichtung (2), dadurch gekennzeichnet, dass die Wärmekapazität der Leitung (1) kleiner ist als die Wärmekapazität der sich beim Durchströmen der Leitung (1) in dieser befindenden Fluidmenge (F), und dass die Heizvorrichtung (2) zum Starten des Beheizens anschaltbar und/oder an die Leitung (1) ankoppelbar und zum Beenden des Beheizens wieder abschaltbar und/oder von der Leitung (1) wieder abkoppelbar ist.

## Beschreibung

Die vorliegende Erfindung bezieht sich auf einen Durchlauferhitzer zum Anschluss an oder zur Integration in eine Kaffeemaschine und/oder einen Milchaufschäumer sowie auf einen entsprechenden Milchaufschäumer und eine entsprechende Kaffeemaschine. Erfindungsgemäß handelt es sich um einen massearmen, nicht dauerbeheizten Durchlauferhitzer mit vernachlässigbarem Wärmepuffer, der nur im Bedarfsfall Wärme abgibt, um z.B. Milch, Milchschaum, Wasser oder Kaffee (oder auch Mischgetränke der vorgenannten Medien) zu erwärmen.

Moderne Kaffeemaschinen, die auch Milch oder Milchschaum (oder Kaffee-Milch-Mischgetränke) ausgeben, können auch kalte Milch oder kalten Milchschaum ausgeben. Um Milch oder Milchschaum alternativ kalt oder erwärmt auszugeben, werden aufwendige Systeme eingesetzt. Beispielsweise existieren Vorrichtungen zur Umgehung des Erhitzers (EP 2 120 656 A, EP 2 583 596 A) oder auch komplett getrennte (doppelte) Pfade zum Erzeugen und zur Ausgabe von kalten oder von warmen Produkten (EP 2 294 952 A).

Nachteile solcher Systeme sind die hohe Anzahl an Komponenten und die damit verbundenen hohen Kosten sowie eine hohe Ausfallwahrscheinlichkeit der Komponenten und Schnittstellen und schließlich ein hoher Steuer- und Regelungsaufwand. Ein weiterer Nachteil der eingesetzten Erwärmungssysteme ist, dass die Erwärmung meist über eine Kontaktfläche eines Rohres bewirkt wird, das eine verhältnismäßig große Masse hat und somit sehr viel Restwärme speichert oder auch dauerbeheizt ist, was Anhaftungen an der Rohrwand begünstigt und schnell zur Verschmutzung bis hin zum Systemausfall führt. Zudem steigen durch die Dauerbeheizung oder die Durchwärmung der großen Massen der Energiebedarf und die Trägheit der Systeme. (Daneben werden auch Systeme mit Dampfzugabe in die Milch oder den Milchschaum eingesetzt; diese haben jeden den Nachteil, dass die Qualität der Milch und der Schaumprodukte nicht an jene der erstgenannten Systeme heranreicht.)

Aufgabe der vorliegenden Erfindung ist es somit, einen Durchlauferhitzer, einen Milchaufschäumer und eine Kaffeemaschine zur Verfügung zu stellen, die zur Ausgabe wahlweise von kaltem oder erwärmtem Medium (bevorzugt: Milch und/oder Milchschaum) befähigt sind. Aufgabe ist darüber hinaus, dies möglichst energiesparend zu realisieren.

Die Aufgabe wird nach den Ansprüchen 1, 10 und 11 gelöst.

Die grundlegende Idee der vorliegenden Erfindung basiert darauf, das medienführende Gefäß (also die medienführende Leitung bzw. die Rohrleitung) so auszubilden, dass dieses/diese eine vernachlässigbare Wärmemenge speichert. Dabei kann ein Beheizen der Leitung selbst und/oder der sich in der Leitung befindenden Medienmenge (Fluidmenge, also z.B. Milch- und/oder Milchschaummenge) erfolgen.

Bevorzugt wird die Beheizung zum Erwärmen des Mediums im Bedarfsfall zuschaltbar gestaltet. Die Ausgestaltung erfolgt bevorzugt so, dass die medienführende Leitung unmittelbar nach Abschalten der Energiezufuhr der Heizvorrichtung wieder abkühlt, so dass in ein und derselben Leitung unmittelbar im Anschluss an die Abgabe einer erwärmten Fluidmenge die Abgabe einer nicht erwärmten Fluidmenge (Kaltdosierung) ermöglicht ist.

Das Fluid (z.B. Milch oder Milchschaum) kann in ein Leitungselement (nachfolgend vereinfacht als Leitung bezeichnet) geleitet werden, das dem Fluid im Bedarfsfall Wärme zuführt. Dies kann direkt über die Oberfläche einer Rohrleitung geschehen, über ein speziell dafür ausgelegtes Leitungsstück (oder auch eine Kammer als Leitungselement) oder über ein innerhalb der Leitung, also im Fluidstrom, befindliches Element (nachfolgend auch als Kontaktkörper bezeichnet).

Vorzugsweise weist die Wandung der Leitung eine so geringe Masse auf, dass nach der Dosierung und nach dem Abschalten der Wärmequelle (Heizvorrichtung) nur noch ein vernachlässigbarer Anteil an Restwärme in der Wandung gepuffert ist. Dieser Anteil ist so gering, dass er für eine mögliche nachfolgende Kaltdosierung keinen nennenswerten Effekt hat. Dies kann beispielsweise durch eine extrem dünnwandige, massearme Rohrleitung aus einem Material möglichst geringer Wärmekapazität realisiert werden.

Zusätzlich kann erfindungsgemäß die dem Fluid bzw. Medium abgewandte Seite der Wandung der Rohrleitung auch aktiv gekühlt werden (beispielsweise durch Einsatz eines Lüfters, einer Wasserkühlung, etc.). Die Milch bzw. der Milchschaum kann nicht nur an der Innenseite, sondern auch an der Außenseite des Rohres entlang geführt werden oder sowohl auf der Innen- als auch auf der Außenseite (insbesondere bei induktiver Beheizung der Leitung, vgl. nachfolgende Beschreibung). Weiterhin können die Oberflächen der fluidbe-rührten Seite(n) der Rohrleitung auch mit einer Antihaftbeschichtung versehen sein, welche das Anhaften von Milchbestandteilen minimiert. Die erfindungsgemäß eingesetzte Leitung bzw. Rohrleitung kann eine Ausprägungsrichtung (also Fließrichtung des darin befindlichen Fluids) haben oder auch eine oder mehrere Umkehrung(en) und somit mehrere Ausprägungen (die Leitung kann in Rohrform, in Wendelform, in Form einer Ansammlung mehrerer verbundener Rohre, in Form von mehreren koaxial ineinander geführten Rohren, wobei dann mindestens eine Umkehrung das Fluid von einem Rohr in ein anderes Rohr führt, und auch in anderen Konfigurationen verwirklicht sein).

Das medienführende Gefäß (Leitung) und/oder weitere Kontaktflächen im Fluid (wie der Kontaktkörper, beispielsweise ein Blankdraht) können direkt elektrisch beheizt werden oder auch indirekt (beispielsweise induktiv, also über Wirbelströme). Auch ist es möglich, das medienführende Gefäß bzw. die Rohrleitung über ein erwärmtes Heizfluid (Heizmedium) wie beispielsweise Wasserdampf oder auch heißes Wasser zu beheizen. Schließlich kann das medienführende Gefäß (Rohrleitung) auch von der Wärmequelle (Heizvorrichtung) entkoppelbar sein, insbesondere mechanisch entkoppelbar sein. Als Heizvorrichtungen sind dabei verschiedene Ausführungen denkbar, z.B. elektrisch beheizte Elemente, Wasserbäder usw. Dabei können die Heizelemente der Heizvorrichtung zur Rohrleitung geführt werden, es ist jedoch umgekehrt auch möglich, die Rohrleitung zu diesen Heizelementen zu führen bzw. zu bewegen.

Nachfolgend wird die vorliegende Erfindung zunächst allgemein, dann anhand mehrerer Ausführungsbeispiele beschrieben. Die in den einzelnen Ausführungsbeispielen in Kombination miteinander verwirklichten Bauelemente eines erfindungsgemäßen Durchlauferhitzers müssen dabei nicht in der in den einzelnen Beispielen gezeigten Kombinationen verwirklicht sein, sondern können auch in anderen Kombinationen realisiert werden. Insbesondere können einzelne der in den gezeigten Ausführungsbeispielen verwendeten Bauelemente auch weggelassen werden oder auf andere Art und Weise mit den Bauelementen desselben Ausführungsbeispiels (oder auch der anderen Ausführungsbeispiele) kombiniert werden. Bereits einzelne der gezeigten Merkmale können für sich eine Verbesserung des Standes der Technik darstellen.

Ein erfindungsgemäßer Durchlauferhitzer ist im Anspruch 1 beschrieben.

Der Begriff der Leitung ist dabei sehr allgemein zu verstehen und legt die geometrische Form nicht fest: So lassen sich zylinderförmige Rohrleitungen ebenso einsetzen wie Verzweigungen solcher Rohrleitungen, Rohrleitungen mit integrierten Sammelkammern für das Fluid oder auch nahezu beliebige andere geometrische Formen. Unter dem Begriff des Fluids ist erfindungsgemäß bevorzugt ein Fluid zu verstehen, das näherungsweise (oder exakt) die chemischen und physikalischen Eigenschaften (beispielsweise: Dichte, spezifische Wärmekapazität, ...) von Wasser aufweist. Insbesondere kann als Fluid Milch, Milchschaum, eine Mischung aus Milch und Milchschaum, Wasser oder auch bereits aufgebrühter Kaffee eingesetzt werden. Insbesondere kann der Durchlauferhitzer auch dazu eingesetzt werden, wahlweise kaltgebrühten Kaffee oder warmgebrühten Kaffee auszugeben, also z.B. die komplexe Leitungsführung stromaufwärts der Durchströmeinheit (vgl. die Bezugszeichen 5a bis 5c, 6 und 7a bis 7c in Figur 1) der DE 10 2011102 733 A1 ersetzen.

Erfindungsgemäß kann gemäß Anspruch 2 die Heizvorrichtung im Bedarfsfall zuschaltbar (wenn die momentan durch die Leitung strömende Fluidmenge erhitzt werden soll) und wieder abschaltbar sein (wenn die momentan durch die Leitung strömende Fluidmenge nicht erhitzt, also in ihrem gegebenen Temperaturzustand beibehalten werden soll). Insbesondere ist ein Beheizen der Leitung möglich, die dann wiederum indirekt das sich momentan in der Leitung befindende Fluid heizt. Anstelle des Beheizens der Wandung der Leitung ist es jedoch auch möglich, einen Kontaktkörper in das Innenvolumen der Leitung einzubringen. Dieser Kontaktkörper kann im Fluidstrom so angeordnet werden, dass das Fluid seine Oberfläche berührend an ihm vorbeiströmt. Der Kontaktkörper kann dann anstelle der Wandung mit der Heizvorrichtung beheizt werden. Schließlich kann auch sowohl ein Heizen der Leitung als auch ein Heizen des Kontaktkörpers durch die Heizvorrichtung erfolgen. Bei einem solchen Kontaktkörper kann es sich beispielsweise um einen Langdraht im Inneren der Leitung handeln, der beabstandet von der Innenwandung der Leitung angeordnet ist.

Die beheizbare Leitung kann auch ein spezifisch zum Erwärmen ausgebildeter Abschnitt einer längeren Leitung (deren andere Abschnitte somit nicht selektiv beheizbar sind) sein.

Das Ankoppeln kann dadurch erfolgen, dass die Heizvorrichtung an die Leitung gekoppelt wird (insbesondere: zur Leitung hinbewegt wird) oder auch umgekehrt (d.h. die Leitung wird an die Heizvorrichtung gekoppelt, insbesondere also zur Heizvorrichtung hinbewegt). Entsprechend erfolgt dann das Abkoppeln.

Weitere vorteilhafterweise realisierte Merkmale beschreibt Anspruch 3. Für alle beschriebenen vorteilhafterweise realisierte Merkmale der abhängigen Ansprüche gilt, dass diese Merkmale in beliebigen Kombinationen miteinander verwirklicht werden können.

Gemäß Anspruch 3 sind bevorzugt alle drei der genannten Merkmale realisiert, wobei bevorzugt nicht nur Abschnitte der Leitung, sondern die gesamte Leitung (bzw. deren Wandung) aus einem entsprechenden Material, mit entsprechender Wanddicke und mit entsprechender Wärmekapazität ausgebildet ist. Zumindest ist es jedoch vorteilhaft, die ersten beiden der in Anspruch 3 beanspruchten Merkmale in Kombination miteinander zu verwirklichen.

Weitere vorteilhafterweise realisierte Merkmale beschreibt Anspruch 4. Dabei wird unter einem unmittelbaren Angrenzen des elektrischen Leiters an die Wandung und/oder den Kontaktkörper verstanden, dass sich die beiden Elemente berühren, dass insbesondere keine elektrische Isolationsschicht zwischen ihnen ausgebildet ist. Um ein solches direktes Heizen zu ermöglichen, ist die Leitung (bzw. deren Wandung) zumindest abschnittsweise als elektrisch leitfähiger Körper ausgebildet, so dass eine elektrische Leitung zwischen dem elektrischen Leiter und der Leitung bzw. der Wandung derselben ermöglicht ist.

Weitere vorteilhafterweise realisierte Merkmale beschreibt Anspruch 5.

Insbesondere kann eine Ausbildung sowohl nach Anspruch 4 als auch nach Anspruch 5 erfolgen. Generell gilt, dass alle in den abhängigen Ansprüchen beschriebenen Heizprinzipien auch kumulativ, also in Kombination miteinander (insbesondere: beliebige paarweise Kombination zweier abhängiger Ansprüche) verwirklicht werden können.

Gemäß der Ansprüche 4 und 5 erfolgt somit ein Anschalten bzw. ein Abschalten der Heizvorrichtung durch Einschalten bzw. Ausschalten der Elektrizitätsversorgung derselben (Beginn des Flusses eines elektrischen Stroms in der Heizvorrichtung bzw. Ende eines solchen Stromflusses).

Zusätzlich zur Beabstandung nach Anspruch 5 kann eine elektrische Isolierung zwischen der Fluidleitung und/oder dem Kontaktkörper einerseits und dem mit elektrischem Strom beaufschlagbaren elektrischen Leiter andererseits realisiert werden (gerade die elektrische Isolierung kann dabei für die Beabstandung sorgen).

Auch ist es möglich, den Durchlauferhitzer mit Dampf vorzuwärmen.

Weitere vorteilhafterweise realisierbare Merkmale beschreibt Anspruch 6. Dabei bedeutet "oder umgekehrt", dass das Fluid zunächst in Hinrichtung durch das Außenrohr strömt und anschließend über die überleitende Umkehrung in das Innenrohr strömt (und dort in Gegenrichtung aus der Leitung abgeleitet wird). Das Außenrohr und das Innenrohr stellen somit zwei koaxiale Rohre dar, wobei das Innenrohr innerhalb des Außenrohrs geführt ist.

Weitere vorteilhafterweise realisierte Merkmale beschreiben die beiden Ansprüche 7 und 8.

Die die Heizleitung (bzw. eine für das Heizfluid verwendete Rohrleitung), das Außenrohr und das Innenrohr umfassende dreifachwandige Rohrleitung weist somit drei koaxiale (z.B. zumindest abschnittsweise zylinderförmige) Rohre auf, wobei das Innenrohr innerhalb der Heizleitung (bzw. der Rohrleitung derselben) geführt ist und die Heizleitung (bzw. die Rohrleitung derselben) innerhalb des Außenrohres geführt ist.

Wie beispielhaft diesen Ansprüchen zu entnehmen ist, sind der Begriff des "Anschaltens" und der Begriff des "Abschaltens" (gemäß Anspruch 2) der Heizvorrichtung im Rahmen der vorliegenden Erfindung sehr breit zu verstehen. Die beiden Begriffe umfassen jedwede wie auch immer (zum Beispiel durch eine elektrische Stromzufuhr und ein Wiederabschalten des elektrischen Stroms, durch das beginnende Einströmen eines Heizmediums bzw. durch das Wiederbeenden des Einströmens eines solchen Heizmediums, ...) verursachte Zustandsänderung an der Heizvorrichtung, die diese Heizvorrichtung (im Hinblick auf die momentan die Leitung durchströmende Fluidmenge) von einem nicht-heizenden Zustand in einen heizenden Zustand überführt ("Anschalten") oder umgekehrt ("Abschalten").

Weitere vorteilhafterweise realisierte Merkmale beschreibt Anspruch 9. Dabei bedeutet "oder umgekehrt", dass nicht das mindestens eine beheizte oder beheizbare Element zur Leitung hin und von dieser wieder wegbewegt wird, sondern umgekehrt die Leitung hin zu dem mindestens einen beheizten oder beheizbaren Element bewegt wird und wieder von ihm weg (also die Leitung im Ortsraum relativ zum ortsfesten beheizten oder beheizbaren Element beweglich ist).

Alternativ zum Vorsehen eines elektrisch beheizten oder beheizbaren Elements oder eines beheizten oder beheizbaren Wasserbads kann auch ein Beheizen mit Dampf (der von einer/der elektrisch betriebenen Kaffeemaschine zur Verfügung gestellt werden kann) erfolgen. Grundsätzlich sind aber auch andere wärmeübertragende Fluide (z. B. Öl) im Rahmen des ein beheizten oder beheizbaren Elementes einsetzbar.

Ein erfindungsgemäßer Milchaufschäumer ist in Anspruch 10 beschrieben, eine erfindungsgemäße Kaffeemaschine in Anspruch 11.

Dabei muss der erfindungsgemäße Durchlauferhitzer jedoch nicht in dem Milchaufschäumer oder der Kaffeemaschine integriert sein, sondern kann auch (beispielweise in einem separaten Gehäuse) als separates, elektrisch betriebenes Gerät ausgebildet sein, das an einen Milchaufschäumer oder an eine Kaffeemaschine angeschlossen werden kann. Der Anschluss kann so erfolgen, dass die Stromversorgung des erfindungsgemäßen Durchlauferhitzers vom angeschlossenen Milchaufschäumer oder von der angeschlossenen Kaffeemaschine übernommen wird.

Gegenüber den aus dem Stand der Technik bekannten Vorrichtungen haben die erfindungsgemäßen Vorrichtungen insbesondere die folgenden Vorteile:
- Es wird nur das Fluid (Milch und/oder Milchschaum) beheizt, das auch unmittelbar ausgegeben wird. Die Gefahr von Keimbildung durch ein dauerbeheiztes Fluid wird somit minimiert.
- Dadurch ist ein geringer Spülmitteleinsatz gegeben, so dass die erfindungsgemäßen Vorrichtungen ökonomischer und ökologischer als bestehende Systeme betrieben werden können.

- Der Energieeinsatz ist bei den erfindungsgemäßen Vorrichtungen reduziert, da nur um Bedarfsfall Energie zur Verfügung gestellt werden muss.
- Die erfindungsgemäßen Vorrichtungen lassen sich einfacher und hygienischer betreiben, da weniger Schnittstellen notwendig sind und da weniger Umschaltmechanismen eingebaut werden müssen. Hierdurch ergibt sich auch eine erhöhte Wartungsfreundlichkeit.
- Insbesondere ist ein einfacher und robuster Aufbau der erfindungsgemäßen Vorrichtungen möglich.

Nachfolgend wird die vorliegende Erfindung anhand mehrerer Ausführungsbeispiele beschrieben.

Dabei zeigen:
Figur 1 einen ersten erfindungsgemäßen Durchlauferhitzer zum direkten elektrischen Heizen der Leitung mittels der Heizvorrichtung.
Figur 2 einen zweiten erfindungsgemäßen Durchlauferhitzer zum indirekten Heizen der Leitung vermittels der Heizvorrichtung durch Induktion.
Figur 3 einen dritten erfindungsgemäßen Durchlauferhitzer zum indirekten elektrischen Heizen der Leitung vermittels der Heizvorrichtung durch Induktion.
Figur 4 einen vierten erfindungsgemäßen Durchlauferhitzer zum Heizen der Leitung durch eine von dieser umschlossene Heizleitung.
Figur 5 einen fünften erfindungsgemäßen Durchlauferhitzer zum Heizen der Leitung über eine konzentrisch innerhalb eines Außenrohres derselben und konzentrisch außerhalb eines Innenrohres derselben geführte Heizleitung.
Figur 6 einen sechsten erfindungsgemäßen Durchlauferhitzer, bei dem die Heizvorrichtung an die zu heizende Leitung ankoppelbare beheizbare Elemente umfasst.
Figur 7 einen siebten erfindungsgemäßen Durchlauferhitzer, bei dem die Heizvorrichtung ein beheizbares, an die zu beheizende Leitung ankoppelbares Wasserbad umfasst.
Figur 8 ein Beispiel für einen erfindungsgemäßen, elektrisch betriebenen Kaffeevollautomaten, in dem ein Durchlauferhitzer wie er in einem der Ausführungsbeispiele gemäß Figuren 1 bis 7 beschrieben ist, integriert ist.

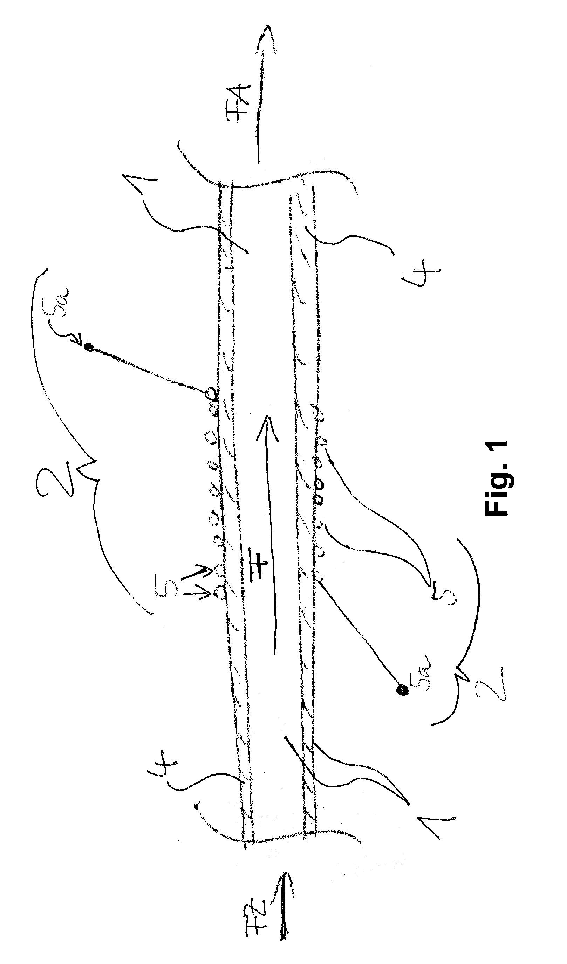

Figur 1 zeigt einen ersten erfindungsgemäßen Durchlauferhitzer. Dieser umfasst eine mit einem Fluid (hier: Milch) durchströmbare, zylinderförmige Leitung 1, die einen Innendurchmesser von 2 bis 6 mm, bevorzugt von 4 mm sowie eine beheizbare Leitungslänge von 20 bis 100 cm, bevorzugt von 50 cm aufweist. Die Milch F wird der Leitung 1 an ihrem einen Ende (hier links) zugeführt, wobei diese Fluidzufuhr (z.B. aus einer Ansaugleitung einer Kaffeemaschine, in der eine Förderpumpe sitzt) mit dem Bezugszeichen FZ bezeichnet ist. Am stromabwärtigen, gegenüberliegenden Leitungs- bzw. Rohrende der Leitung 1 erfolgt die Ableitung der (bei eingeschalteter Heizvorrichtung 2) erhitzten Milch, wobei diese Fluidableitung mit dem Bezugszeichen FA bezeichnet ist.

Um sicherzustellen, dass die Rohrleitung eine so geringe Masse hat, dass nach der Dosierung einer gewünschten, vermittels der Heizvorrichtung 2 erhitzten Fluidmenge F, also nach einem Abschalten der Heizvorrichtung nur noch ein vernachlässigbarer Anteil an Restwärme in der Rohrwandung 4 gepuffert ist, ist die Leitung 1 bzw. deren Wandung 4 aus Edelstahl mit einer spezifischen Wärmekapazität von Q_{V2A}=0.477 kJ/(kg·K) und mit einer Wanddicke von 0.1 mm bis 0.3 mm, hier 0.2 mm, ausgebildet. Die Leitung 1 wiegt somit 0.5 bis 1 Gramm bei 0.2 mm Wandstärke und einer Länge von 50 cm bis 100 cm und ist somit um das 13-fache bzw. 2.5-fache leichter als die in das Leitungsinnere passende Fluidmenge F wenn diese Milch bzw. lockerer Milchschaum ist.

Erfindungsgemäß erfolgt das Beheizen der Leitung 1 (und somit indirekt das Beheizen der die Leitung 1 durchströmenden Fluidmenge F, indem diese Fluidmenge F durch die erhitzte Wandung 4 erhitzt wird) wie folgt: Die Heizvorrichtung 2 umfasst über die vorgenannte Leitungslänge einen unmittelbar angrenzend an die Wandung 4 wendeiförmig um die außenliegende Oberfläche der Wandung 4 gewickelten elektrischen Leiter 5 (hier: der hier Kupferdraht als Heizdraht mit einem Drahtdurchmesser von 0.2 bis 1 mm ist, jedoch auch als Heizband oder als Heizbeschichtung ausgeführt sein kann), wobei der Leiter 5 in Achsrichtung der Leitung 1 über deren gesamte Länge (hier ist der Leiter 5 nur ausschnittsweise gezeigt) gewunden ist. Je nach Drahtstärke variiert die Gesamtlänge und der Draht kann daher in einfachen Wicklungen gewunden sein oder der Draht kann als Helix gewunden sein und dann um das Rohr gewickelt sein. Die Rohrheizung erbringt bevorzugt eine Heizleistung von 70 bis 75 Watt pro cm².

Die beiden sich entlang der Leitungslängsachse gesehen gegenüberliegenden Enden des Kupferdrahtes 5 sind mittels zweier hier leidglich angedeuteter Anschlüsse 5a mit einer hier nicht gezeigten Stromquelle verbunden. Die Heizvorrichtung 2 umfasst im gezeigten Beispiel somit den Leiter 5, die Anschlüsse 5a und die nicht gezeigte Stromquelle.

Wird der Kupferdraht 5 somit über die Stromquelle mit einem Strom von 4.5 Ampere (bei 230 V) beaufschlagt, so wird durch die unmittelbare Berührung der Wandung 4 durch den Leiter 5 die Leitung 1 in ca. 1 bis 5 Sekunden aufgeheizt. Nach Abschalten des Stromes erfolgt eine Abkühlung der Leitung 1 bzw. deren Wandung 4 innerhalb von 10 bis 20 Sekunden. Mit dem gezeigten, sehr einfach aufgebauten, direkt elektrisch beheizten Rohr lässt sich somit ein schnelles Umschalten zwischen dem Dosieren einer erhitzten Milchmenge F und einer nicht-erhitzten, also ihre vor dem Einleiten FZ vorhandene Temperatur beibehaltende Milchmenge F (und umgekehrt) realisieren.

Nachfolgend werden weitere Ausführungsbeispiele eines erfindungsgemäßen Durchlauferhitzers beschrieben, mit denen ebenfalls ein solches schnelles Umschalten realisierbar ist, wobei identische oder in ihrer Funktion entsprechende Bauelemente mit identischen Bezugszeichen wie in Figur 1 bezeichnet sind. Nachfolgend werden daher jeweils nur die Unterschiede zum in Figur 1 gezeigten Ausführungsbeispiel beschrieben.

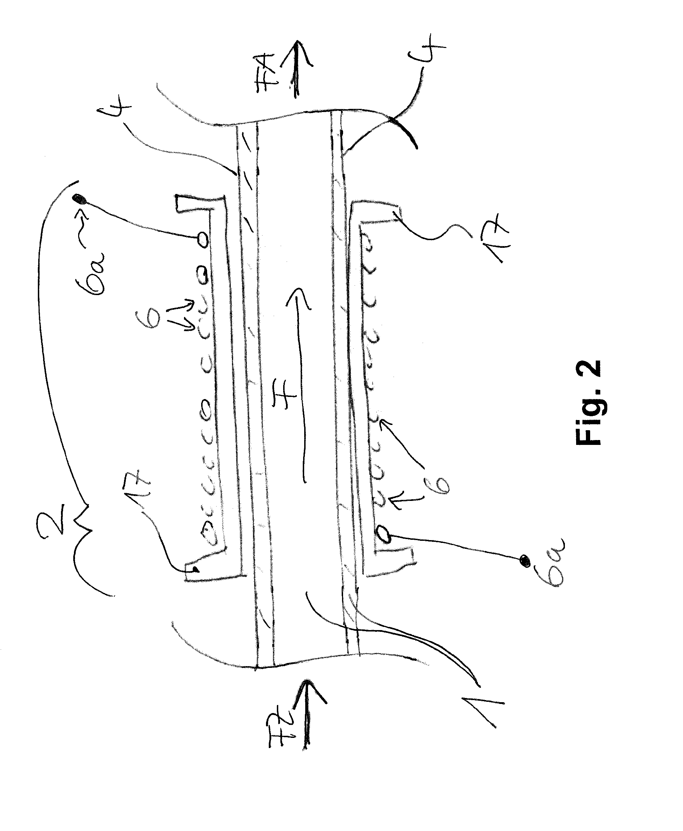

Die identisch wie in Figur 1 ausgebildete zylindrische Leitung 1 ist auch beim Ausführungsbeispiel der Figur 2 mit einem elektrischen Leiter in Form eines Kupferdrahtes 6 umwickelt, wobei in Längsachsrichtung gesehen die Umwicklung lediglich über etwa 60% der Leitungslänge erfolgt. Es liegen hier 3-lagige Wicklungen mit je Lage 56 Wicklungen bzw. Windungen auf 54 mm Länge vor (Leitungsquerschnitt 2.5 mm²). Die elektrischen Anschlüsse zur hier ebenfalls nicht gezeigten Stromquelle sind mit den Bezugszeichen 6a versehen.

Im Unterschied zum in Figur 1 gezeigten Fall wird die Leitung bzw. das Rohr 1 im vorliegenden Fall jedoch induktionserhitzt: Aus diesem Grund ist der Leiter 6 nicht unmittelbar (wie in Figur 1) über die Außenseite der Wandung 4 gewickelt, sondern verläuft beabstandet von dieser Wandung 4 und elektrisch isoliert davon. Um dies zu gewährleisten, befindet sich zwischen den einzelnen Leiterwicklungen 6 und der Wandung 4 ein im wesentlichen zylindrischer, aus einem Kunststoff hergestellter und somit den Leiter 6 elektrisch von der Edelstahlwandung 4 isolierender Spulenträger 17.

Nach dem Anschalten der Stromquelle der Heizvorrichtung 2 (die hier die Stromquelle, die Anschlüsse 6a, den Leiter 6 sowie den Spulenträger 17 umfasst) erfolgt bei einem Stromdurchfluss von etwa 15 Ampere ein indirektes, induktives Erwärmen des Edelstahlrohres 1 bzw. dessen Wandung 4 über den stromdurchflossenen Leiter 6. Die Wanddicke des Spulenträgers 17 zwischen Leiter 6 einerseits und Wandung 4 der Leitung 1 andererseits beträgt hier etwa 0.5 bis 2 mm (bei einem Abstand des Spulenträgers zur Leitung von etwa 0.2 mm bis 1 mm), wodurch (bei unmittelbarem Angrenzen der innenliegenden Wandung des Spulenträgers 17 an die Wandung 4 der Leitung 1 einerseits und der außenliegenden Wandung des Spulenträgers 17 an den straff über diese Wandung gewickelten elektrischen Leiter 6 andererseits) ein entsprechender Abstand des Leiters 6 von der Wandung 4 der Leitung 1 gegeben ist.

Mit dem gezeigten Induktionssystem ist nach dem Einschalten des Stroms ein Aufheizen einer im Rohr 1 befindlichen Milchmenge M von 100 g von Raumtemperatur (20°C) auf 60°C bis 70°C in etwa 10 Sekunden möglich. Die Abkühlzeit des Rohres 1 bei abgeschaltetem Strom durch den elektrischen Leiter 6 ist mit dem in Figur 1 gezeigten Durchlauferhitzer vergleichbar.

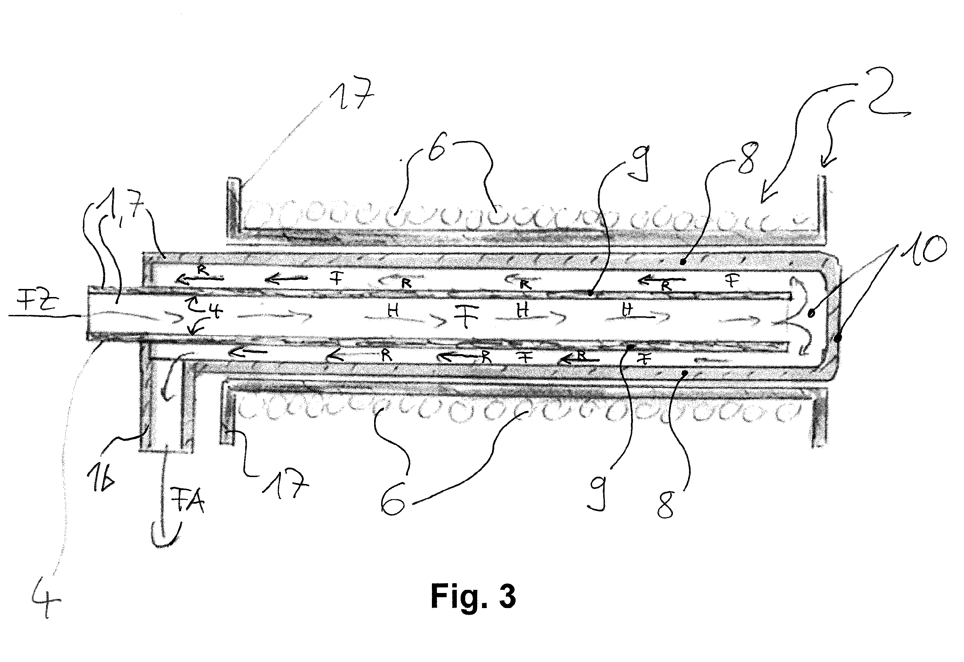

Figur 3 zeigt einen weiteren erfindungsgemäßen Durchlauferhitzer, bei dem eine beidseitige Nutzung der Rohrleitungsoberflächen der Wandung 4 eines induktiv beheizten Dünnwandrohres 9 der Leitung 1 erfolgt. Der Aufbau ist grundsätzlich wie beim Durchlauferhitzer aus Figur 2, so dass nachfolgend nur die Unterschiede beschrieben werden (die Anschlüsse 6a sind aus Übersichtlichkeitsgründen nicht gezeigt, der Kunststoff-Spulenträger 17 umschließt hier die Außenseite der das Innenrohr 9 sowie das Außenrohr 8 umfassenden doppelwandigen Rohrleitung 7 der Leitung 1).

Im zylindrischen Hohlraum im Inneren des Spulenträgers 17 ist die Leitung 1 als doppelwandige Rohrleitung 7 ausgebildet, wobei ein zylinderförmiges Edelstahlrohr 9 mit einer Wanddicke seiner Wandung 4 von 0.2 mm als Innenrohr 9 koaxial in einem dieses Innenrohr umschließenden Außenrohr 8 vergrößerten Durchmessers gelagert ist. Die Wandung des Außenrohres 8 (die somit dem Spulenträger 17 zugewandt ist), ist hier aus Kunststoff ausgebildet und weist eine Wanddicke von 1.5 bis 2 mm auf. Der Innendurchmesser des Edelstahl-Innenrohres 9 beträgt hier 4 mm, sein Außendurchmesser beträgt somit 4.4 mm, und der Innendurchmesser des Außenrohres 8 beträgt 7 bis 8 mm. Der Außendurchmesser des Außenrohres 8 beträgt 10 bis 14 mm. Der Innendurchmesser des zylindrischen Hohlraumes im Spulenkörper 17 beträgt 10.4 bis 16 mm, so dass das Außenrohr 8 entlang der Längsachse der Leitung 1 und des Spulenkörpers 17 formschlüssig innerhalb des Spulenkörpers 17 gelagert ist (der Spalt zwischen Außenrohr 8 und Spulenkörper 17 dient lediglich der besseren Übersichtlichkeit der Figur).

Entlang der Längsachse der gezeigten (im wesentlichen rotationssymmetrischen) Anordnung gesehen an dem dem Zufluss FZ der Milch F gegenüberliegenden Ende des Innenrohres 9 (und somit auch an dem dem Zufluss FZ gegenüberliegenden Ende des Spulenkörpers 17) weist die Leitung 1 eine vom Innenrohr 9 in das Außenrohr 8 überleitende Umkehrung 10 auf. Über diese wird die in das Innenrohr 9 eingeleitete FZ Flüssigkeit F, die durch das Innenrohr 9 geströmt ist, durch einen Wechsel ihrer Strömungsrichtung um 180° in das Außenrohr 8, also genauer gesagt in den Zwischenraum zwischen der Innenwandung dieses Rohres 8 und der Außenwandung des Innenrohres 9 übergeleitet.

Wird der elektrische Strom der Heizvorrichtung 2 bzw. des elektrischen Leiters 6 derselben angeschaltet, so wird die in der Leitung 1 fließende Milch F somit zweifach erwärmt: die induktive Erwärmung des Edelstahl-Innenrohres 9 sorgt beim Fließen der Milch F in Hinrichtung H (von links nach rechts in Figur 3) für eine erste Erwärmung dadurch, dass die strömende Milchmenge die erhitzte Innenwand des Innenrohres 9 berührt. Die in entgegengesetzte Richtung R im Zwischenraum zwischen Innenrohr 9 und Außenrohr 8 zurückfließende Milch F wird dadurch, dass sie die Außenseite der Wandung 4 umspült und diese Außenwandung somit berührt, ein zweites Mal indirekt induktiv durch das erhitzte Innenrohr 9 erwärmt. Schließlich verlässt die Milch F über den radial aus dem Außenrohr 8 wegführenden Auslass 1b (der an dem der Umkehrung 10 gegenüberliegenden Ende der Leitung 1, also am Einlass FZ in das Innenrohr 9 angeordnet ist) die Leitung 1. Der Fluidabfluss FA erfolgt somit radial von der zentralen Längsachse des Systems weg.

Der gezeigte Durchlauferhitzer hat insbesondere den Vorteil, dass bei geringer Baulänge dennoch eine sehr effiziente Aufheizung (durch zweimaliges Aufheizen) einer hindurch strömenden Fluidmenge F ermöglicht ist, indem sowohl die Innen- als auch die Außenseite eines induktiv beheizten Rohres 9 genutzt wird. Das Rohr hat trotz seiner geringen Masse einen kleinen Anteil Restwärme. Wird nach der Dosierung das Rohr innen und außen mit kaltem, nachströmendem Medium benetzt (nach Abschalten der Heizung), so kühlt das Edelstahlrohr schnell ab und die Gefahr von Anhaftungen durch große Hitze wird minimiert (schneller als bei nur außen oder nur innen benetztem Rohr).

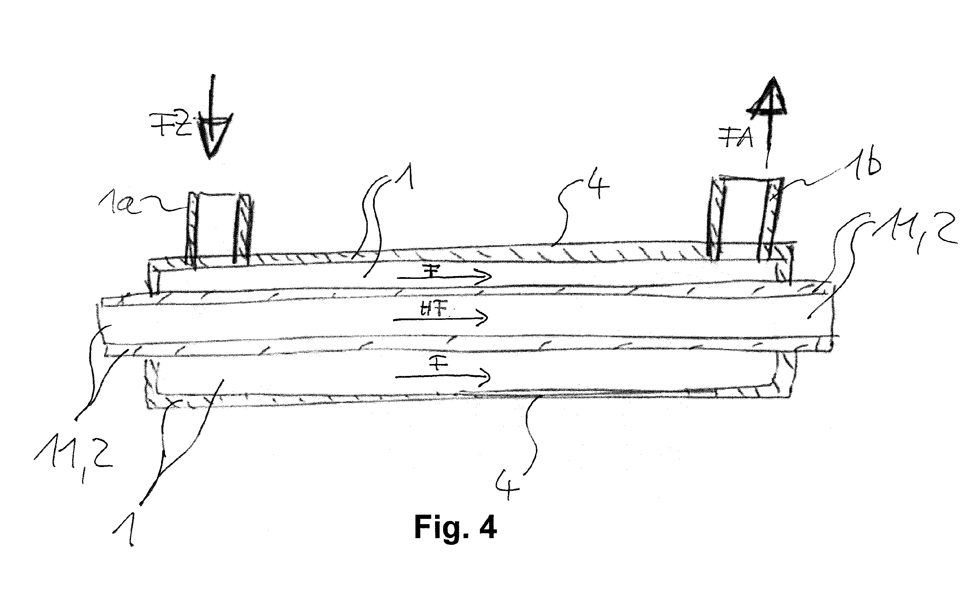

Figur 4 zeigt einen weiteren erfindungsgemäßen Durchlauferhitzer. Die Heizvorrichtung 2 dieses Durchlauferhitzers umfasst ein zylinderförmiges Dünnwandrohr 11 mit einem Innendurchmesser von 4 mm, einer Wandstärke von 0.2 mm und dem Wandmaterial Edelstahl. Das Dünnwandrohr 11 ist als Heizleitung ausgebildet, d.h. es wird (in Figur 4 von links nach rechts) mit erhitztem Heizfluid HF in Form von erhitztem Wasser oder Dampf durchströmt (der Boiler zum Erzeugen des erhitzten Wassers sowie die in die Heizleitung 11 mündende Zuleitung und die aus der Heizleitung 11 mündende Ausleitung für das Heißwasser sind nicht gezeigt).

Die mit dem zu erhitzenden Fluid (Milch) durchströmte Leitung 1 ist (bis auf den Einlass 1a und den Auslass 1b) als die Heizleitung 11 vollständig umschließendes, zylinderförmiges Rohr aus Kunststoff mit einem Innendurchmesser von 7 mm bis 8 mm und einer Wandstärke der Wandung 4 von 1.5 mm bis 2 mm ausgebildet. Die Leitung 1 und die Heizleitung 11 bilden somit entlang der Zylinderlängs- bzw. Zylindersymmetrieachse der Anordnung eine doppelwandige Rohrleitung, bei dem die Wandung 4 der Leitung 1 als Außenrohr die Wandung der Heizleitung 11 als Innenrohr koaxial umschließt. An einem Ende der Leitung 1 führt radial von außen (Milchzufuhr FZ) ein Einlass 1a in die Leitung 1. Am entlang der Längsachse des Systems gesehen gegenüberliegenden (hier rechten) Ende führt der Auslass 1b zur Ableitung des die Leitung durchströmenden Fluids F radial nach außen (Fluidabfuhr FA).

Das die Leitung 1 durchströmende Fluid F umströmt das Innenrohr bzw. die Heizleitung 11 allseitig und wird somit aufgrund der Wandungseigenschaften der Heizleitung 11 vermittels des erhitzten Wassers HF (alternativ kann auch Wasserdampf als Heizfluid HF eingesetzt werden) schnell erhitzt. Die Eigenschaften der Wandung 4 des Außenrohres bzw. der Leitung 1 sorgen dafür, dass nach dem Abschalten der Heizvorrichtung 2 (also dem Einstellen des Durchströmens von Heizfluid HF) eine nahezu instantane Abkühlung der Leitung 1 eintritt. Nachströmende Milch F wird somit nach Abschalten der Heizvorrichtung 2 wunschgemäß nicht mehr erhitzt.

Figur 4 zeigt somit ein von Innen beheiztes, mit Milch F durchströmtes Dünnwandrohr 1. Ebenso ist es auch denkbar (nicht gezeigt), die Leitung 1 als von außen mit Heizfluid umströmtes Dünnwandrohr auszubilden, wobei dann die im Innenrohr fließende Milch F durch das dieses Rohr umströmende Heizfluid erhitzt wird.

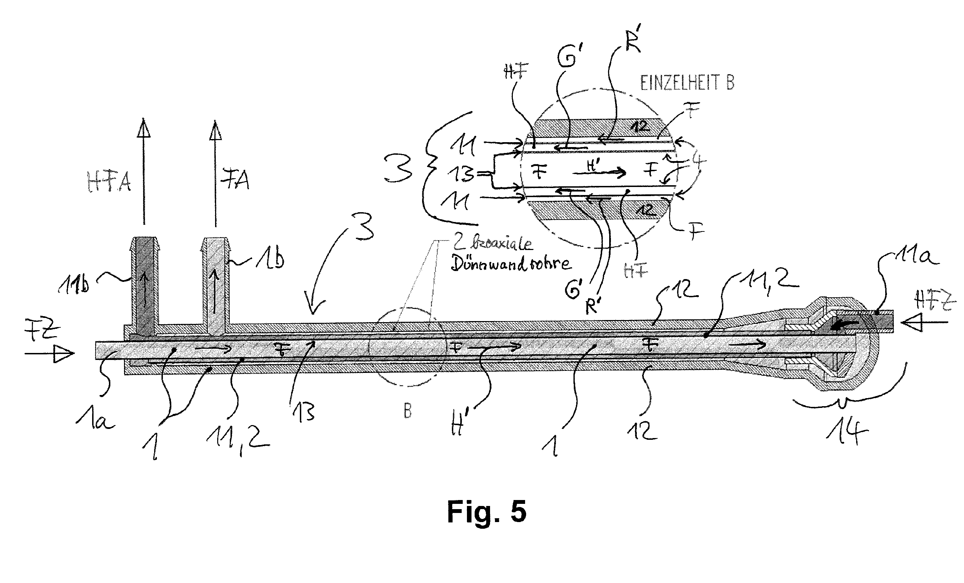

Figur 5 zeigt einen besonders vorteilhaften, auf demselben Grundprinzip wie in Figur 4 gezeigt basierenden Durchlauferhitzer mit Heizleitung 11. Identische Bezugszeichen bezeichnen dabei erneut identische bzw. sich in ihrer Funktion zumindest entsprechende Bauelemente oder Merkmale. Nachfolgend werden daher nur die Unterschiede zu Figur 4 beschrieben (die Heizfluidabfuhr ist darüber hinaus mit HFA bezeichnet, die Heizfluidzufuhr mit HFZ).

Ähnlich wie in Figur 3 gezeigt, strömt die zu erhitzende Flüssigkeit Milch F zunächst in Hinrichtung H' (Einströmungsrichtung) durch ein Innenrohr 13 der Leitung 1, bevor an dem dem Einlass 1a der Fluidzufuhr FZ in dieses Innenrohr 13 gegenüberliegenden Ende der Leitung 1 vermittels einer Umkehrung 14 ein Richtungswechsel der strömenden Milch F um 180° bewirkt wird, nach dem die zu erhitzende Milch F außerhalb der äußeren Wandung des Innenrohres 13 in die entgegengesetzt zur Hinrichtung H' gerichteten Gegenrichtung (Ausströmungsrichtung R') zu dem der Umkehrung 14 gegenüberliegenden Ende (also dem Ende des Einlasses 1a) der Leitung 1 zurückströmt. An diesem Ende verlässt die Milch F die beheizte Leitung 1 durch den radial von der Längsachse des Systems wegführenden Auslass 1b der Leitung 1 (Fluidabfluss FA).

Anders als in Figur 3 wird in Figur 5 jedoch Heizfluid HF (hier: erhitztes Wasser oder erhitzter Wasserdampf- der entsprechende Boiler und die Zuleitungen sind ebenso wie in Figur 4 nicht gezeigt) zwischen dem in Hinrichtung H' und dem in Rückrichtung R' strömenden Fluid F in eine der Gegenrichtung R' entsprechenden Richtung G' geströmt. Hierzu sind die mit dem Fluid durchströmbare Leitung 1 und die Heizleitung 11 zusammen zwischen den beiden Endabschnitten 1a und 14 als dreifachwandige Rohrleitung 3 ausgebildet: Das die Milch F in Hinrichtung H' führende Innenrohr 13 ist koaxial vom ebenfalls zylindrischen Rohr der Heizleitung 11 umschlossen, so dass das Heizfluid HF im Zwischenraum zwischen den beiden Rohren 11, 13 in die Richtung G' strömen kann. Das Rohr der Heizleitung 11 wird schließlich (zusammen mit dem Rohr 13) konzentrisch vom Außenrohr 12 der Leitung 1 umschlossen (vgl. insbesondere "Einzelheit B" in Figur 5). Somit erfolgt der Rückstrom des zu erhitzenden Fluids F im Zwischenraum zwischen der Außenwandung des Rohres der Heizleitung 11 und der Innenwandung des Außenrohres 12 in Richtung R'. Die Einleitung des Heizfluids HF in die Leitung 1 erfolgt dabei vermittels eines in der Umkehrung 14 ausgebildeten Heizfluideinlasses 11a, wobei das Heizfluid HF nach Einströmen durch diesen Einlass 11a entlang der Längsachse des Systems in Gegenrichtung G' durch den Zwischenraum zwischen den Rohren 11, 13 strömt, um an dem der Umkehrung 14 gegenüberliegenden Ende 1a der Leitung 1 über einen radial von der Längsachse des Systems nach außen führenden Heizfluidauslass 11b abgeleitet zu werden (abfließendes Heizfluid HFA; das über den Einlass 11a einfließende Heizfluid ist mit HFZ bezeichnet).

Damit die Leitung 1 eine so geringe Masse hat, dass nach der Dosierung und dem Abschalten der Wärmequelle (also dem Abschalten des Durchflusses von Heizfluid HF durch die Heizleitung 11 der Heizvorrichtung 2) nur noch ein vernachlässigbarer Anteil an Restwärme in den Rohrwandungen gepuffert ist, sind das Rohr der Heizleitung 11 und das Innenrohr 13 als Dünnwandrohre aus Edelstahl mit einer Wandstärke von jeweils 0.2 mm ausgebildet. Das Außenrohr 12 ist aus Kunststoff und mit einer Wandstärke von 1.5 mm bis 2 mm ausgebildet. Entscheidend sind somit das Material und die Wandstärke bzw. die Wanddicke der Wandung 4 der beiden Rohre 11, 13 der Leitung 1 bzw. der Heizleitung. Der Innendurchmesser des Rohres 13 beträgt hier 4 mm, der Innendurchmesser des Rohres 11 7 mm bis 8 mm und der Innendurchmesser des Außenrohres 12 9 mm bis 12 mm.

Das zu erhitzende Fluid F wird effektiv erwärmt, da es sowohl in Hinrichtung H' das innere Rohr 13 durchströmt, als auch das Rohr der Heizleitung 11 in Rückrichtung R' von außerhalb umströmt und somit zweifach durch die beiden koaxialen Dünnwandrohre 11, 13 hindurch vom Heizfluid HF erhitzt wird.

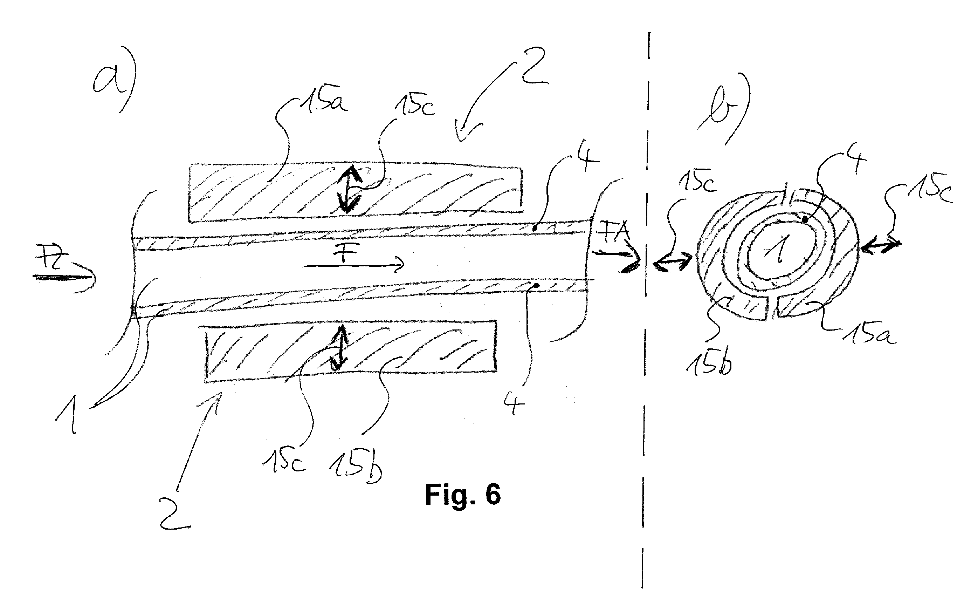

Figur 6 zeigt einen sechsten erfindungsgemäßen Durchlauferhitzer, bei dem anstelle eines elektrischen Leiters 5 zum direkten Heizen der Leitung 1 (wie in Figur 1 gezeigt) zwei elektrisch beheizbare Elemente 15a, 15b zum Heizen der Leitung 1 eingesetzt werden. Die anderen Merkmale entsprechen denen des in Figur 1 gezeigten Ausführungsbeispiels, so dass nachfolgend nur die Unterschiede beschrieben werden.

Die beiden beheizbaren Elemente 15a, 15b sind als halbierte Hohlzylinder ausgebildet, mit ihren Längsachsen parallel zur Rotationssymmetrieachse des zylinderförmigen Leitungsrohres 1 ausgerichtet und umschließen das Rohr 1. Der Innendurchmesser der halbzylinderförmigen Elemente 15a, 15b entspricht dem Außendurchmesser des Leitungsrohres 1. Die beiden beheizbaren Elemente 15a, 15b umfassen einen Heizdraht (Widerstandsdraht), ein Heizband oder eine PTC Heizpatrone zum Heizen.

Wie Figur 6a in einer Schnittansicht in einer Ebene der Rotationssymmetrieachse des Leitungsrohres 1 und Figur 6b in einer Schnittebene senkrecht zur Rotationssymmetrieachse des Leitungsrohres 1 zeigen, sind die beiden Elemente 15a, 15b auf gegenüberliegenden Seiten des Leitungsrohres 1 so positioniert, dass sie in ihrer in Bezug auf die Leitung 1 nächstliegenden Position die Leitung 1 zusammen lückenlos und formschlüssig umschließen. In dieser Position bilden die beiden Elemente 15a, 15b zusammen einen das Rohr 1 vollständig umhüllenden Vollzylinder. Diese Position wird zum Starten des Beheizens eingenommen, so dass die Wandung 4 der Leitung 1 durch die Berührung der beiden Elemente 15a, 15b direkt aufgeheizt wird.

Wie die Pfeile 15c skizzieren, können die beiden Elemente 15a, 15b senkrecht zu ihren Längsachsen und somit zur Rotationssymmetrieachse der Leitung 1, also von dieser Rotationssymmetrieachse aus gesehen radial nach außen bewegt werden. Diese mechanische Bewegung erfolgt durch einen hier nicht gezeigten mechanischen, elektromagnetischen oder hydraulischen Antrieb. Durch die Bewegung nach außen lösen sich die beiden Elemente 15a, 15b von der Wandung 4 der Leitung 1. Zum Beenden des Beheizens erfolgt somit nicht nur ein Abschalten der Heizung der beiden Elemente 15a, 15b, sondern auch ein schnelles Wegbewegen dieser beiden Elemente von der Wandung 4 der Leitung 1. Ein schnelles Beenden des Heizvorgangs der Leitung 1 ist somit sichergestellt.

Figur 6 zeigt somit ein Dünnwandrohr als Leitung 1 mit zwei relativ dazu beweglichen Heizquellen der Heizvorrichtung 2 in Form der beiden zum Starten des Beheizens an die Leitung 1 ankoppelbaren und zum Beenden des Beheizens wieder von der Leitung 1 abkoppelbaren Elemente 15a, 15b.

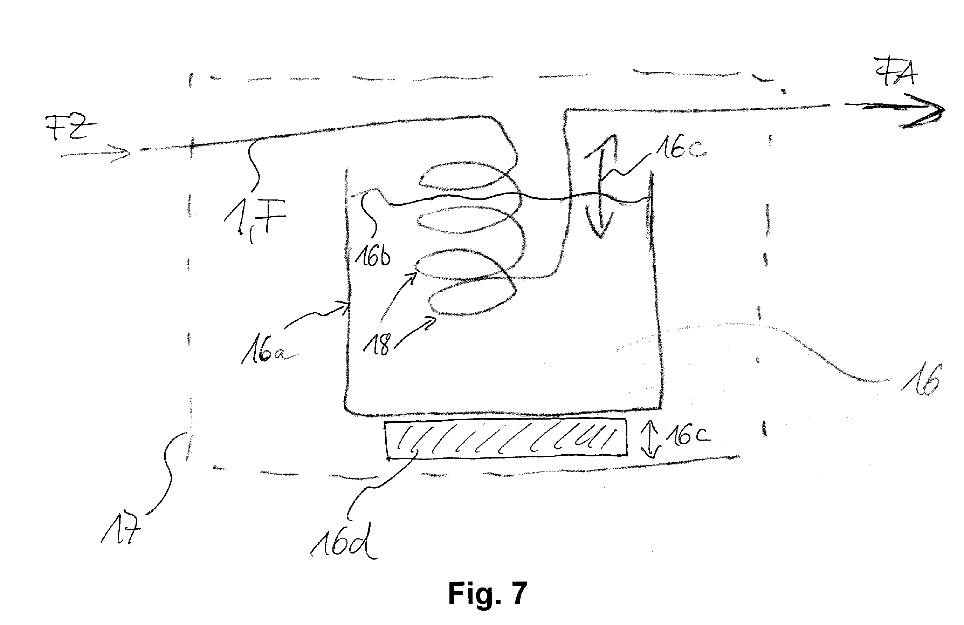

Figur 7 zeigt einen weiteren erfindungsgemäßen Durchlauferhitzer mit einem beheizbaren, an die Leitung 1 ankoppelbaren Element, das hier in Form eines beheizbaren Wasserbades 16 ausgebildet ist. Die Leitung 1 ist grundsätzlich wie in Figur 1 gezeigt ausgebildet, jedoch nicht als gerades Rohr ausgeführt, sondern mit einem Mittelteil versehen, der mehrere helixförmig verlaufende Windungen 18 aufweist, die so ausgeformt sind, dass ein vollständiges Eintauchen der Windungen 18 der Leitung 1 in das einseitig offene Gehäuse 16a des beheizbaren Wasserbades 16 ermöglicht ist. Die Beheizung des Wassers im Wasserbad 16 erfolgt elektrisch und ist hier nicht gezeigt.

Wie Figur 7 anhand der Pfeile 16c skizziert, kann das beheizbare Wasserbad 16 von der Leitung 1 (bzw. deren Windungen 18) wegbewegt werden und wieder zur Leitung 1 bzw. den Windungen 18 hinbewegt werden. Eine solche Bewegung erfolgt vermittels eines motorbetriebenen Verschiebemechanismus 16d, der hier lediglich angedeutet ist.

Der Start des Beheizens der Leitung 1 bzw. der Windungen 18 erfolgt dadurch, dass das Wasserbad 16, das mit bereits vorgeheiztem Heißwasser (16b skizziert die Wasseroberfläche) gefüllt ist mittels des Verschiebemechanismus 16d zur Leitung 1 bzw. den Windungen 18 hinbewegt wird, so dass diese Windungen 18, die vor Beginn des Heizvorgangs oberhalb der Wasseroberfläche 16b positioniert sind (also nicht in das erhitzte Wasser des Wasserbades eingetaucht sind) vollständig in das erhitzte Wasser des Wasserbades 16 eingetaucht werden. Somit kann das in der Leitung 1 strömende Fluid F in den Windungen 18 sehr schnell erhitzt werden. Zum Beenden des Beheizens erfolgt ein Wegbewegen des Wasserbades 16 von der Leitung 1 bzw. den Windungen 18, so dass die Windungen 18 vollständig aus dem erhitzten Wasser des Bades 16 auftauchen. Durch die wie im Beispiel der Figur 1 gegebenen Eigenschaften der Leitung 1 bzw. deren Wandung 4 (hier nicht gezeigt) ist sichergestellt, dass nach dem Auftauchen der Leitung 1 bzw. der Windungen 18 aus dem Wasser des Wasserbades 16 nur ein vernachlässigbarer Anteil an Restwärme in der Rohrwandung 4 gepuffert ist, so dass das Beheizen des in der Leitung 1 strömenden Fluides F praktisch instantan eingestellt wird.

Die Anordnung aus Windungen 18, Wasserbad 16 sowie Verschiebemechanismus 16d ist von einem wasserdichten Gehäuse 17 umgeben.

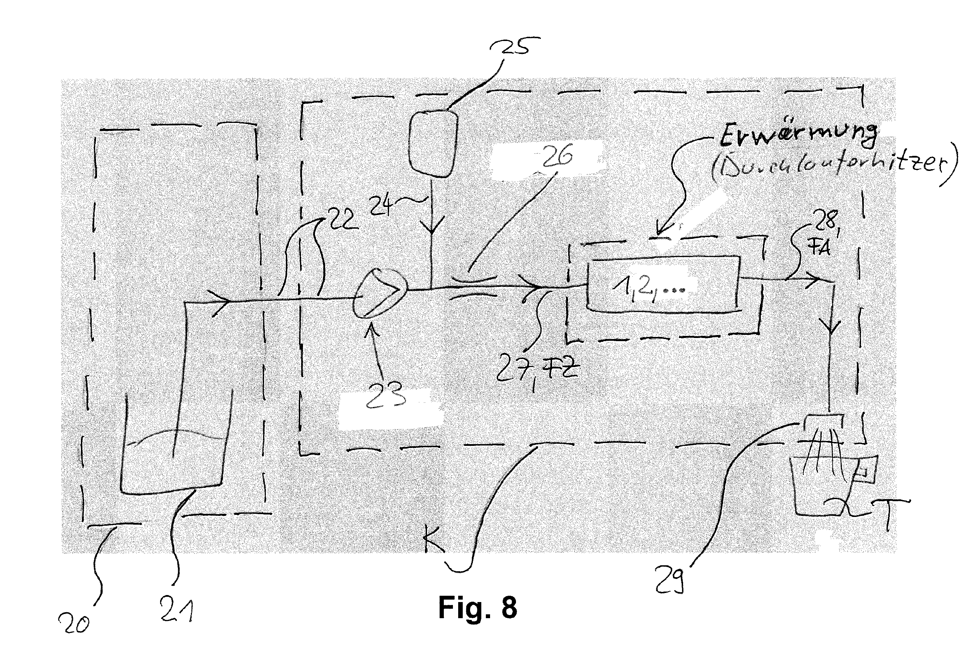

Figur 8 zeigt ein Beispiel für einen erfindungsgemäßen, elektrisch betriebenen Kaffeevollautomaten, in den ein Durchlauferhitzer, wie er in den Ausführungsbeispielen der Figuren 1 bis 7 beschrieben ist, integriert ist. Aus einem Kühler 20 mit einem Milchvorrat 21 kann Milch vermittels einer Pumpe 23 der Kaffeemaschine K über eine Leitung 22 zugeführt werden. Stromabwärts der Pumpe 23 mündet zunächst eine Druckluftzufuhrleitung 24, die Druckluft aus einer Druckluftquelle 25 zuführt, in die Leitung 22. Stromabwärts der Einmündung der Druckluftleitung 24 ist in der Leitung 22 eine Engstelle in Form einer Blende 26 ausgebildet. An dieser Engstelle erfolgt ein Verwirbeln der von der Druckluftquelle 25 zugeführten Druckluft mit der über die Pumpe 23 zugeführten Milch, so dass nach einem dem Fachmann an sich bekannten Prinzip Milchschaum hergestellt wird, der über die Leitung 22 bzw. den Anschluss 27 dieser Leitung an die durchströmbare Leitung 1 des Durchlauferhitzers letzterem zugeführt wird (Fluidzufuhr FZ in den Durchlauferhitzer). Die Milchschaumableitung (Fluidableitung FA) aus der beheizbaren Leitung 1 erfolgt über die ausgangsseitig an die Leitung 1 angeschlossene Ablaufleitung 28, die über die Ausgabestelle 29 den wahlweisen erhitzten oder nicht-erhitzten Milchschaum an ein externes Gefäß in Form einer Tasse T abgibt.

Die Steuerung der Pumpe 23, der Druckluftquelle 25 sowie des erfindungsgemäßen Durchlauferhitzers erfolgt mit der Steuer- und Regeleinheit der Kaffeemaschine K, die hier nicht gezeigt ist.

## Patentansprüche

1. Durchlauferhitzer zum Anschluss an oder zur Integration in eine Kaffeemaschine (K) und/oder einen Milchaufschäumer mit
einer mit einem Fluid durchströmbaren Leitung (1), und
einer zum Beheizen der Leitung (1) und/oder einer sich beim Durchströmen der Leitung (1) in dieser befindenden Fluidmenge (F) ausgebildeten Heizvorrichtung (2),
***dadurch gekennzeichnet, dass***
die Wärmekapazität der Leitung (1) kleiner ist als die Wärmekapazität der sich beim Durchströmen der Leitung (1) in dieser befindenden Fluidmenge (F).

2. Durchlauferhitzer nach dem vorhergehenden Anspruch,
***dadurch gekennzeichnet, dass***
die Heizvorrichtung (2) zum Starten des Beheizens anschaltbar und/oder an die Leitung (1) ankoppelbar und zum Beenden des Beheizens wieder abschaltbar und/oder von der Leitung (1) wieder abkoppelbar ist.

3. Durchlauferhitzer nach einem der vorhergehenden Ansprüche,
***dadurch gekennzeichnet, dass***
die Leitung (1) zumindest abschnittsweise ein Material mit einer spezifischen Wärmekapazität von ≤ 1000 J·kg⁻¹·K⁻¹, bevorzugt von ≤ 500 J·kg⁻¹·K⁻¹, und/oder Al, Cu oder Edelstahl enthält oder daraus besteht
und/oder
dass die Wanddicke zumindest von Abschnitten der Wandung (4) der Leitung (1) ≤ 0.8 mm, bevorzugt ≤ 0.5 mm, bevorzugt ≤ 0.2 mm ist
und/oder
dass die Wärmekapazität des Materials zumindest von Abschnitten der Leitung (1) um mindestens das 10-fache, bevorzugt 20-fache, bevorzugt 50-fache, bevorzugt 100-fache kleiner ist als die Wärmekapazität der sich beim Durchströmen der Leitung (1) in letzterer befindenden Fluidmenge (F).

4. Durchlauferhitzer nach einem der vorhergehenden Ansprüche,
***dadurch gekennzeichnet, dass***
die Leitung (1) und/oder ein im Inneren der Leitung (1) positionierter, vom durch die Leitung (1) strömenden Fluid (F) umströmbarer Kontaktkörper mit der Heizvorrichtung (2) direkt elektrisch heizbar ist,
wobei bevorzugt das direkte Heizen durch einen vermittels der Heizvorrichtung (2) durch die Wandung (4) der Leitung (1) und/oder durch den Kontaktkörper geleiteten elektrischen Strom und/oder durch einen stromdurchflossenen, zumindest abschnittsweise um die Wandung (4) und/oder den Kontaktkörper gewickelten und unmittelbar an die Wandung (4) und/oder den Kontaktkörper angrenzenden elektrischen Leiter (5) erfolgt.

5. Durchlauferhitzer nach einem der vorhergehenden Ansprüche,
***dadurch gekennzeichnet, dass***
die Leitung (1) und/oder ein im Inneren der Leitung (1) positionierter, vom durch die Leitung (1) strömenden Fluid (F) umströmbarer Kontaktkörper mit der Heizvorrichtung (2) indirekt elektrisch heizbar ist, bevorzugt induktiv elektrisch heizbar ist,
wobei bevorzugt die Heizvorrichtung (2) einen die Leitung (1) und/oder den Kontaktkörper zumindest abschnittsweise umwickelnden, jedoch beabstandet von der Leitung (1) und/oder von dem Kontaktkörper ausgebildeten, mit einem elektrischen Strom beaufschlagbaren elektrischen Leiter (6) umfasst, der so positioniert ist, dass mit ihm im strombeaufschlagten Zustand ein induktives Erhitzen der Leitung (1) und/oder des Kontaktkörpers erfolgt.

6. Durchlauferhitzer nach dem vorhergehenden Ansprüche,
***dadurch gekennzeichnet, dass***
die Leitung (1) zumindest abschnittsweise als doppelwandige Rohrleitung (7) mit einem konzentrisch innerhalb eines Außenrohres (8) geführten Innenrohr (9) ausgebildet ist, in der (7) das Fluid zunächst in Hinrichtung (H) durch das Innenrohr (9) und anschließend, nach Durchströmen einer vom Innenrohr (9) in das Außenrohr (8) überleitenden Umkehrung (10) in Gegenrichtung (R) durch das Außenrohr (8) strömt oder umgekehrt, und die (7) zumindest abschnittsweise vom elektrischen Leiter (6) umwickelt ist.

7. Durchlauferhitzer nach einem der vorhergehenden Ansprüche,
***dadurch gekennzeichnet, dass***
die Heizvorrichtung (2) eine die Leitung (1) zumindest abschnittweise umschließende Heizleitung (11) aufweist oder dass die Leitung (1) zumindest abschnittsweise eine Heizleitung (11) umschließt, wobei die Heizleitung (11) zum Durchströmen mit einem erhitzten Heizfluid (HF), insbesondere mit erhitztem Wasser und/oder mit Wasserdampf, ausgebildet ist.

8. Durchlauferhitzer nach dem vorhergehenden Ansprüche,
***dadurch gekennzeichnet, dass***
die Leitung (1) und die Heizleitung (11) zumindest abschnittsweise als dreifachwandige Rohrleitung (3) mit der konzentrisch innerhalb eines Außenrohres (12) geführten Heizleitung (11) und einem konzentrisch innerhalb der Heizleitung (11) geführten Innenrohr (13) ausgebildet ist, wobei das Fluid zunächst in Hinrichtung (H') durch das Innenrohr (13) und anschließend, nach Durchströmen einer vom Innenrohr (13) in das Außenrohr (12) überleitenden Umkehrung (14) in Gegenrichtung (R') durch das Außenrohr (12) strömt oder umgekehrt, so dass das Fluid sowohl im Innenrohr (13) strömend und dabei durch relativ dazu außenliegend strömendes Heizfluid (HF) als auch im Außenrohr (12) strömend und dabei durch relativ dazu innenliegend strömendes Heizfluid (HF) erhitzbar ist.

9. Durchlauferhitzer nach einem der vorhergehenden Ansprüche,
***dadurch gekennzeichnet, dass***
die Heizvorrichtung (2) mechanisch an die Leitung (1) ankoppelbar und wieder von der Leitung (1) abkoppelbar ist,
wobei bevorzugt mindestens ein beheiztes oder beheizbares Element, insbesondere ein elektrisch beheiztes oder beheizbares Element (15a, 15b) oder ein beheiztes oder beheizbares Wasserbad (16), zur Leitung (1) hin und wieder von der Leitung (1) weg bewegbar (15c, 16c) ist oder umgekehrt.

10. Elektrisch betriebener Milchaufschäumer,
***dadurch gekennzeichnet, dass***
ein zum Erhitzen von Milch als Fluid ausgebildeter Durchlauferhitzer nach einem der vorhergehenden Ansprüche in den Milchaufschäumer integriert ist.

11. Elektrisch betriebene Kaffeemaschine (K), insbesondere Kaffeevollautomat,
***dadurch gekennzeichnet, dass***
ein zum Erhitzen von Milch als Fluid ausgebildeter Durchlauferhitzer oder ein Milchaufschäumer nach einem der vorhergehenden Ansprüche in die Kaffeemaschine (K) integriert ist.
